# EUROPEAN PATENT APPLICATION

(11) **EP 3 876 377 A1**
(43) Date of publication of application: **08.09.2021**
(21) Application number: 20888740.6
(22) Date of filing: 10.12.2020
(51) Int. Cl.: H02J 3/00, H02J 3/14

(54) **ENERGY CONSUMPTION SYSTEM**

(30) Priority: 19.01.2020 CN 202010059826
(71) Applicant: HENGSHUI POWER SUPPLY BRANCH OF STATE GRID HEBE I ELECTRIC POWER CO., LTD., Taocheng District Hengshui Hebei 053000 (CN); HENGSHUI ELECTRIC POWER DESIGN CO., LTD., Taocheng District Hengshui Hebei 053000 (CN); State Grid Corporation of China, Beijing 100031 (CN)
(72) Inventor: HAN, Jianzhen, Hengshui Hebei 053000 (CN); YANG, Haiyue, Hengshui Hebei 053000 (CN); WANG, Zhengping, Hengshui Hebei 053000 (CN); YANG, Junguang, Hengshui Hebei 053000 (CN); ZHANG, Jie, Hengshui Hebei 053000 (CN); LIU, Eryong, Hengshui Hebei 053000 (CN); LI, Tieliang, Hengshui Hebei 053000 (CN); MEI, Xiaohui, Hengshui Hebei 053000 (CN); LIU, Tingzhong, Hengshui Hebei 053000 (CN)
(74) Representative: Meyer, Thorsten
(86) International application number: PCT/CN2020/135087
(87) International publication number: WO 2021/143405

(57) **Abstract**

The present disclosure provides an energy consumption system, including a control module and an energy consumption module. The energy consumption module is connected to feeders, and configured to perform load switching between the feeders according to a control instruction of the control module. The control module collects real-time current and voltage information of each port of the energy consumption module, and controls a working status of the energy consumption module based on the real-time current and voltage information to realize load switching between the feeders. The energy consumption system in the present disclosure is intelligent and convenient, and can effectively improve energy utilization, realize load transfer, provide a flexible control means for a control center, and realize flexible energy scheduling of a grid.

## Description

### TECHNICAL FIELD

The present disclosure relates to the technical field of energy consumption, and more specifically, to an energy consumption system.

### BACKGROUND

As lots ofdistributed energy systems, micro grids, electric vehicles, and other energy storage apparatuses are connected to the distribution network, the existing radial distribution network structure has been unable to satisfy diversified and personalized power needs. A highly random power supply or load may easily cause feeder overloading or voltage overrunning, which limits power consumption of new energy-based grid-connected power generation.

Therefore, how to realize energy consumption and flexible load scheduling of a grid becomes a problem to be urgently resolved in the power system industry.

### SUMMARY

An objective of the present disclosure is to provide an energy consumption system, to realize reasonable energy consumption, thereby achieving high energy utilization and flexible load scheduling of a grid.

To achieve the foregoing objective, the present disclosure provides an energy consumption system. The system includes a control module and an energy consumption module, where
the energyconsumption module is connected to feeders, and configured to perform load switching between the feeders according to a control instruction of the control module; and
the control module collects real-time current and voltage information of each port of the energy consumption module, and controls a working status of the energy consumption module based on the real-time current and voltage information to realize load switching between the feeders.

Optionally, the energy consumption module includes a first converter, a second converter, a third converter, a fourth converter, a first capacitor, a second capacitor, a first filter, a second filter, a third filter, and a fourth filter;
an alternate current (AC) terminal of the first converter is connected to a first feeder by the first filter, a first direct current (DC) terminal of the first converter is connected to a first terminal of the first capacitor and a second DC terminal of the fourth converter, and a second DC terminal of the first converter is connected to a second terminal of the first capacitor and a first DC terminal of the fourth converter;
an AC terminal of the second converter is connected to a second feeder by the second filter, a first DC terminal of the second converter is connected to a first terminal of the second capacitor and a second DC terminal of the third converter, and a second DC terminal of the second converter is connected to a second terminal of the second capacitor and a first DC terminal of the third converter;
an AC terminal of the third converter is connected to a third feeder by the third filter;
an AC terminal of the fourth converter is connected to a fourth feeder by the fourth filter;
the firstterminal of the first capacitor is connected to the first terminal of the second capacitor, the second terminal of the first capacitor is connected to the second terminal of the second capacitor, and the first terminal and the second terminal of the first capacitor serve as DC plug and play (UPnP) ports; and
the control module collects real-time current and voltage information of the first feeder, the second feeder, the third feeder, the fourth feeder, and the two terminals of the first capacitor, and controls working statuses of the first converter, the second converter, the third converter, and the fourth converter based on the real-time current and voltage information to realize load switching between the feeders.

Optionally, the control module includes a detection unit, an operation unit, a drive unit, and a communications unit;
an inputterminal of the detection unit is connected to the first feeder, the second feeder, the third feeder, the fourth feeder, the first terminal of the first capacitor, and the second terminal of the first capacitor, an output terminal of the detection unit is connected to an input terminal of the operation unit, an output terminal of the operation unit is connected to an input terminal of the drive unit, an output terminal of the drive unit is connected to the first converter, the second converter, the third converter, and the fourth converter, an input terminal of the communications unit serves as a port for receiving upper-layer scheduling information, and an output terminal of the communications unit is connected to the input terminal of the operation unit; and
the detection unit collects the real-time current and voltage information of the first feeder, the second feeder, the third feeder, the fourth feeder, and the two terminals of the first capacitor, and sends the real-time current and voltage information to the operation unit; the operation unit generates, based on the real-time current and voltage information or the upper-layer scheduling information, a driving signal of load switching, and sends the driving signal to the drive unit; and the drive unit adjusts the working statuses of the first converter, the second converter, the third converter, and the fourth converter based on the driving signal to realize load switching between the feeders.

Optionally, that the control module controls the working statuses of the first converter, the second converter, the third converter, and the fourth converter based on the real-time current and voltage information includes:
when the energyconsumption system currently works in a first working mode, if the real-time current and voltage information indicates that a port voltage of the third feeder is less than a first preset voltage and a supply current of the first feeder is greater than a first preset current, controlling an available converter in the first working mode to work in a rectification mode, and enabling the first feeder and an available feeder in the first working mode to supply power to the third feeder, where the available converter in the first working mode is the second converter and/or the fourth converter, and the available feeder in the first working mode is the second feeder and/or the fourth feeder; and
the first working mode is as follows: the DC UPnP port is not connected to any external device, the first converter works in the rectification mode, the third converter works in an inversion mode, the second converter and the fourth converter are cut off, and the first feeder supplies power to the third feeder.

Optionally, that the control module controls the working statuses of the first converter, the second converter, the third converter, and the fourth converter based on the real-time current and voltage information includes:
when theenergyconsumption system currently works in a second working mode, if the real-time current and voltage information indicates that a port of the second feeder is short-circuited, controlling the second converter to cut off, and detecting whether the first feeder can consume load of the third feeder; and
if the first feeder cannot consume the load of the third feeder, controlling the fourth converter to work in a rectification mode, and enabling the first feeder and the fourth feeder to supply power to the third feeder; or if the first feeder can consume the load of the third feeder, enabling the first feeder to supply power to the third feeder; where
the second working mode is as follows: the DC UPnP port is not connected to any external device, the first converter and the second converter work in the rectification mode, the third converter works in an inversion mode, the fourth converter is cut off, and the first feeder and the second feeder supply power to the third feeder.

Optionally, that the control module controls the working statuses of the first converter, the second converter, the third converter, and the fourth converter based on the real-time current and voltage information includes:
when the energyconsumption system currently works in a third working mode, if the real-time current and voltage information indicates that the four feeders cannot consume load of a random power generation device, controlling an energy storage device to work in a buck mode, and enabling the random power generation device to supply power to the first feeder, the second feeder, the third feeder, the fourth feeder, and the energy storage device; where
the third working mode is as follows: the DC UPnP port is connected to the random power generation device and the energy storage device, the random power generation device is started, the energy storage device is cut off, the first converter, the second converter, the third converter, and the fourth converter work in an inversion mode, and the random power generation device supplies power to the first feeder, the second feeder, the third feeder, and the fourth feeder.

Optionally, that the control module controls the working statuses of the first converter, the second converter, the third converter, and the fourth converter based on the real-time current and voltage information includes:
when the energyconsumption system currently works in a fourth working mode, if the real-time current and voltage information indicates that a port of the third feeder is short-circuited, controlling the third converter to cut off, and detecting whether the first feeder can consume load of a random power generation device; and
if the firstfeeder cannot consume the load of the random power generation device, controlling an available converter in the fourth working mode to work in an inversion mode, and enabling the random power generation device to supply power to the first feeder and an available feeder in the fourth working mode; or if the first feeder can consume the load of the random power generation device, enabling the random power generation device to supply power to the first feeder; where the available converter in the fourth working mode is the second converter and/or the fourth converter, and the available feeder in the fourth working mode is the second feeder and/or the fourth feeder; and
the fourth working mode is as follows: the DC UPnP port is connected to the random power generation device, the random power generation device is started, the first converter and the third converter work in an inversion mode, the second converter and the fourth converter are cut off, and the random power generation device supplies power to the first feeder and the third feeder.

Optionally, that the control module controls the working statuses of the first converter, the second converter, the third converter, and the fourth converter based on the real-time current and voltage information includes:
when theenergyconsumption system currently works in a fifth working mode, if the real-time current and voltage information indicates that a supply current of a random power generation device is less than a second preset current and a port voltage of a random load device is less than a second preset voltage, controlling an energy storage device to work in a boost mode, and/or controlling an available converter in the fifth working mode to work in a rectification mode, and enabling the random power generation device, the energy storage device, and/or an available feeder in the fifth working mode to supply power to the random load device; where the available converter in the fifth working mode is at least one of the first converter, the second converter, the third converter, and the fourth converter, and the available feeder in the fifth working mode is at least one of the first feeder, the second feeder, the third feeder, and the fourth feeder; and
the fifth working mode is as follows: the DC UPnP port is connected to the random power generation device, the random load device, and the energy storage device, the random power generation device and the random load device are started, the energy storage device, the first converter, the second converter, the third converter, and the fourth converter are cut off, and the random power generation device supplies power to the random load device.

Optionally, the control module further controls the working statuses of the first converter, the second converter, the third converter, and the fourth converter based on the upper-layer scheduling information to realize load switching between the feeders; and
that the control module controls the working statuses of the first converter, the second converter, the third converter, and the fourth converter based on the upper-layer scheduling information includes:
when the energy consumption system currently works in a sixth working mode, if the upper-layer scheduling information indicates to control the first converter to cut off, controlling the first converter to cut off, controlling the second converter and/or the third converter to work in a rectification mode, and enabling the second feeder and/or the third feeder to supply power to the fourth feeder; where
the sixth working mode is as follows: the DC UPnP port is not connected to any external device, the first converter works in the rectification mode, the fourth converter works in an inversion mode, the second converter and the third converter are cut off, and the first feeder supplies power to the fourth feeder.

Optionally, the control module further controls the working statuses of the first converter, the second converter, the third converter, and the fourth converter based on the upper-layer scheduling information to realize load switching between the feeders; and
that the control module controls the working statuses of the first converter, the second converter, the third converter, and the fourth converter based on the upper-layer scheduling information includes:
when the energyconsumption system currently works in a seventh working mode, if the upper-layer scheduling information indicates to control a random power generation device to cut off, controlling the random power generation device to cut off, and detecting whether the first feeder and the third feeder can consume load of the second feeder and the fourth feeder; and
if the firstfeeder and the third feeder cannot consume the load of the second feeder and the fourth feeder, controlling an energy storage device to work in a boost mode, and enabling the second feeder and the fourth feeder to supply power to the first feeder, the third feeder, and the energy storage device; or if the first feeder and the third feeder can consume the load of the second feeder and the fourth feeder, enabling the second feeder and the fourth feeder to supply power to the first feeder and the third feeder; where
the seventh working mode is as follows: the DC UPnP port is connected to the random power generation device and the energy storage device, the random power generation device is started, the energy storage device is cut off, the second converter and the fourth converter work in a rectification mode, the first converter and the third converter work in an inversion mode, and the random power generation device, the second feeder, and the fourth feeder supply power to the first feeder and the third feeder.

Optionally, the input terminal of the communications unit is further configured to provide a port for receiving history reference information; and
the operation unit generates, based on at least one of the real-time current and voltage information, the upper-layer scheduling information, and the history reference information, the driving signal of load switching, where the history reference information includes a history factor of affecting user load and history load data.

The energyconsumption system provided in the present disclosure has the following beneficial effects: In the present disclosure, the control module is used to adjust the working mode of the energy consumption module to realize load transfer and balancing between the feeders. The energy consumption system provided in the present disclosure is more intelligent and convenient, and can realize reasonable energy consumption, thereby achieving high energy utilization and flexible load scheduling of a grid.

### BRIEF DESCRIPTION OF THE DRAWINGS

To describe the technical solutions in the embodiments of the present disclosure more clearly, the following briefly describes the accompanying drawings required for describing the embodiments or the prior art. Apparently, the accompanying drawings in the following description show merely some embodiments of the present disclosure, and persons of ordinary skill in the art may still derive other accompanying drawings from these accompanying drawings without creative efforts.
FIG. 1 is a schematic structural diagram of an energy consumption system according to an embodiment of the present disclosure;
FIG. 2 is a schematic structural diagram of a control module according to an embodiment of the present disclosure;
FIG. 3 is a schematic diagram of a partial structure of an energy consumption system according to an embodiment of the present disclosure; and
FIG. 4 is a control flowchart of an energy consumption system according to an embodiment of the present disclosure.

### DETAILED DESCRIPTION

To make the to-be-resolved technical problems, the technical solutions, and the beneficial effects of the present disclosure clearer, the present disclosure is described in further detail below with reference to the accompanying drawings and embodiments. It should be understood that the specific embodiments described herein are merely intended to illustrate the present disclosure and are not intended to limit the present disclosure.

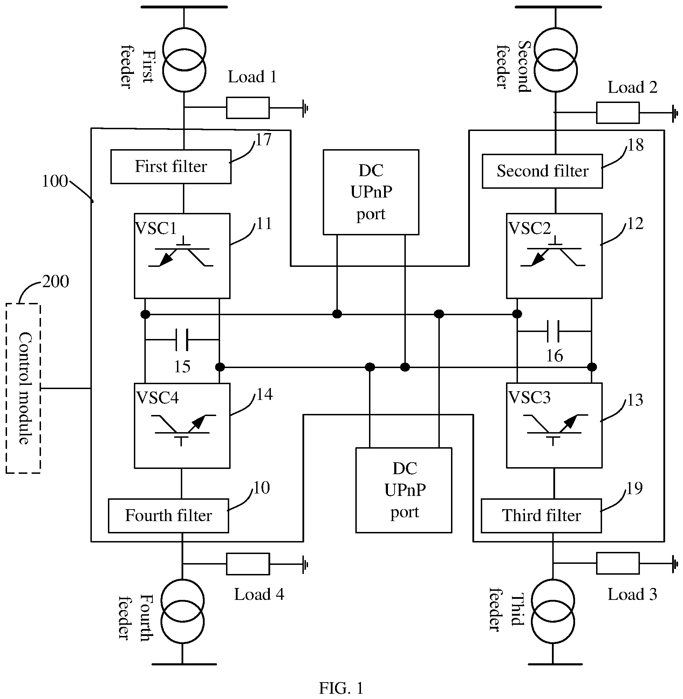

FIG. 1 is a schematic structural diagram of an energy consumption system according to an embodiment of the present disclosure. The energy consumption system includes a control module 200 and an energy consumption module 100.

The energy consumption module 100 is connected to feeders, and configured to perform load switching between the feeders according to a control instruction of the control module 200.

The controlmodule 200 collects real-time current and voltage information of each port of the energy consumption module 100, and controls a working status of the energy consumption module 100 based on the real-time current and voltage information to realize load switching between the feeders.

The energyconsumption module 100 includes a first converter 11, a second converter 12, a third converter 13, a fourth converter 14, a first capacitor 15, a second capacitor 16, a first filter 17, a second filter 18, a third filter 19, and a fourth filter 10.

An AC terminal of the first converter 11 is connected to a first feeder by the first filter 17, a first DC terminal of the first converter 11 is connected to a first terminal of the first capacitor 15 and a second DC terminal of the fourth converter 14, and a second DC terminal of the first converter 11 is connected to a second terminal of the first capacitor 15 and a first DC terminal of the fourth converter 14.

An AC terminal of the second converter 12 is connected to a second feeder by the second filter 18, a first DC terminal of the second converter 12 is connected to a first terminal of the second capacitor 16 and a second DC terminal of the third converter 13, and a second DC terminal of the second converter 12 is connected to a second terminal of the second capacitor 16 and a first DC terminal of the third converter 13.

An AC terminal of the third converter 13 is connected to a third feeder by the third filter 19.

An AC terminal of the fourth converter 14 is connected to a fourth feeder by the fourth filter 10.

The first terminal of the first capacitor 15 is connected to the first terminal of the second capacitor 16, and the second terminal of the first capacitor 15 is connected to the second terminal of the second capacitor 16. The first terminal and the second terminal of the first capacitor 15 serve asDC UPnP ports.

The control module 200 collects real-time current and voltage information of the first feeder, the second feeder, the third feeder, the fourth feeder, and the two terminals of the first capacitor 15, and controls working statuses of the first converter 11, the second converter 12, the third converter 13, and the fourth converter 14 based on the real-time current and voltage information to realize load switching between the feeders.

In this embodiment, the first converter 11, the second converter 12, the third converter 13, and the fourth converter 14 are all controlled sources. The controlled source may be a controlled voltage source or a controlled current source.

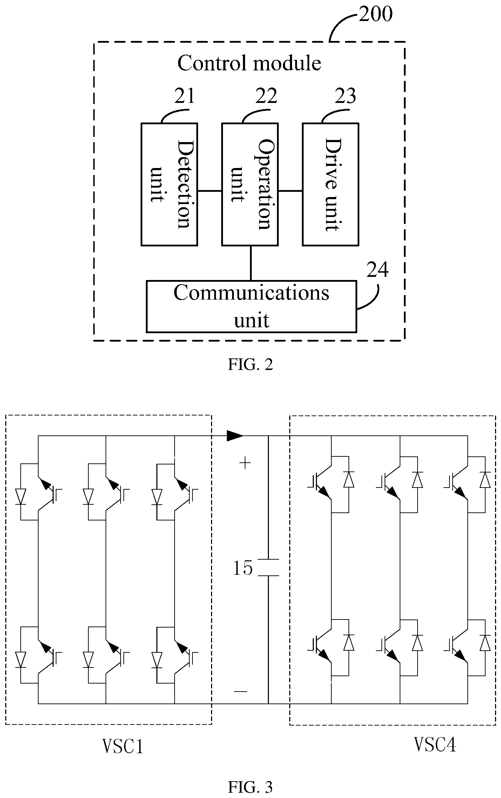

In this embodiment, FIG 3 is a schematic diagram of a single-side structure of an energy consumption system according to an embodiment present disclosure. Specifically, FIG. 3 shows the first converter 11, the fourth converter 14, and the first capacitor 15. Both the first converter 11 and the fourth converter 14 can be implemented by a plurality of voltage source converters. The second converter 12 and the third converter 13 can also be implemented by the structure shown in FIG. 3. Details are not described herein.

In this embodiment, the control module 200 can control directions of load currents between the feeders by controlling the working statuses of the first converter 11, the second converter 12, the third converter 13, and the fourth converter 14, and realize any power matching by controlling sizes of firing angles of power tubes of the first converter 11, the second converter 12, the third converter 13, and the fourth converter 14, to transfer load between the feeders as required. This can realize load balancing and load flow adjustment, and improve energy utilization.

It can be learned from the above description that, on one hand, the present disclosure provides an energy consumption module 100 with a plurality of back-to-back terminals. The energy consumption module 100 is characterized by a simple structure and convenient switching, and can support a plurality of power supply modes. On the other hand, in the present disclosure, the control module 200 can be used to adjust a working mode of a power tube of each converter in the energy consumption module 100 to realize load transfer and balancing between the feeders. The energy consumption system provided in the present disclosure is more intelligent and convenient, and can realize reasonable energy consumption, thereby achieving high energy utilization and flexible load scheduling of a grid.

Optionally, as shown in FIG. 2, in a specific implementation of the energy consumption system provided in the present disclosure, the control module 200 includes a detection unit 21, an operation unit 22, a drive unit 23, and a communications unit 24.

An input terminal of the detection unit 21 is connected to the first feeder, the second feeder, the third feeder, the fourth feeder, the first terminal of the first capacitor 15, and the second terminal of the first capacitor 15. An output terminal of the detection unit 21 is connected to an input terminal of the operation unit 22. An output terminal of the operation unit 22 is connected to an input terminal of the drive unit 23, and an output terminal of the drive unit 23 is connected to the first converter 11, the second converter 12, the third converter 13, and the fourth converter 14. An input terminal of the communications unit 24 is a port for receiving upper-layer scheduling information, and an output terminal of the communications unit 24 is connected to the input terminal of the operation unit 22.

The detection unit 21 collects the real-time current and voltage information of the first feeder, the second feeder, the third feeder, the fourth feeder, and the two terminals of the first capacitor 15, and sends the real-time current and voltage information to the operation unit 22. The operation unit 22 generates, based on the real-time current and voltage information or the upper-layer scheduling information, a driving signal of load switching, and sends the driving signal to the drive unit 23. The drive unit 23 adjusts the working statuses of the first converter 11, the second converter 12, the third converter 13, and the fourth converter 14 based on the driving signal to realize load switching between the feeders.

In this embodiment, the control module 200 can further receive the upper-layer scheduling information. In this embodiment of the present disclosure, load switching between the feeders may be triggered based on one of the following two conditions:
1. The control module 200 detects the real-time current and voltage information of each port of the energy consumption module 100, and automatically controls the working statuses of the first converter 11, the second converter 12, the third converter 13, and the fourth converter 14 based on the real-time current and voltage information to realize load switching between the feeders.
2. The control module 200 receives the upper-layer scheduling information, and controls the working statuses of the first converter 11, the second converter 12, the third converter 13, and the fourth converter 14 based on the upper-layer scheduling information to realize load switching between the feeders.

Optionally, in a specific implementation of the energy consumption system provided in the present disclosure, that the control module 200 controls the working statuses of the first converter 11, the second converter 12, the third converter 13, and the fourth converter 14 based on the real-time current and voltage information may include:
when theenergyconsumption system currently works in a first working mode, if the real-time current and voltage information indicates that a port voltage of the third feeder is less than a first preset voltage and a supply current of the first feeder is greater than a first preset current, controlling an available converter in the first working mode to work in a rectification mode, and enabling the first feeder and an available feeder in the first working mode to supply power to the third feeder. The available converter in the first working mode is the second converter 12 and/or the fourth converter 14, and the available feeder in the first working mode is the second feeder and/or the fourth feeder.

The firstworking mode is as follows: The DC UPnP port is not connected to any external device, the first converter 11 works in the rectification mode, the third converter 13 works in an inversion mode, the second converter 12 and the fourth converter 14 are cut off, and the first feeder supplies power to the third feeder.

In this embodiment, load switching between the feeders is triggered based on the voltage and current information collected by the control module 200. In the first working mode in this embodiment, the DC UPnP may not be connected to any external device, or may be connected to an external device, to control the external device to cut off.

The control mode provided in this embodiment of the present disclosure may also be described as follows: The energy consumption system works in the first working mode (in other words, the third feeder is powered by the first feeder). If the voltage and current information collected by the control module 200 indicates that the first feeder cannot satisfy a load demand of the third feeder, the control module 200 controls the available converter (namely, the second converter 12 and/or the fourth converter 14) in the first working mode to work in the rectification mode, and enables the first feeder and the available feeder (namely, the second feeder and/or the fourth feeder) in the first working mode to supply power to the third feeder. There is at least one available feeder. For example, in this embodiment, the available feeder in the first working mode may be the second feeder, the fourth feeder, or the second feeder and the fourth feeder.

In this embodiment, the control module 200 may alternatively control the working statuses of the first converter 11, the second converter 12, the third converter 13, and the fourth converter 14 based on the upper-layer scheduling information. For example, the current working mode of the energy consumption system is as follows: The first converter 11 works in the rectification mode, the third converter 13 works in the inversion mode, the second converter 12 and the fourth converter 14 are cut off, and the first feeder supplies power to the third feeder. In this case, if the control module 200 receives the upper-layer scheduling information that indicates to enable the first feeder to supply power to the second feeder and the third feeder, based on the current working mode of the energy consumption system, the control module 200 can control the second converter 12 to work in the inversion mode to interconnect the first feeder, the second feeder, and the third feeder.

Optionally, in a specific implementation of the energy consumption system provided in the present disclosure, that the control module 200 controls the working statuses of the first converter 11, the second converter 12, the third converter 13, and the fourth converter 14 based on the real-time current and voltage information may include:
when the energy consumption system currently works in a second working mode, if the real-time current and voltage information indicates that a port of the second feeder is short-circuited, controlling the second converter 12 to cut off, and detecting whether the first feeder can consume load of the third feeder; and
if the first feeder cannot consume the load of the third feeder, controlling the fourth converter 14 to work in a rectification mode, and enabling the first feeder and the fourth feeder to supply power to the third feeder; or if the first feeder can consume the load of the third feeder, enabling the first feeder to supply power to the third feeder.

The second working mode is as follows: The DC UPnP port is not connected to any external device, the first converter 11 and the second converter 12 work in the rectification mode, the third converter 13 works in an inversion mode, the fourth converter 14 is cut off, and the first feeder and the second feeder supply power to the third feeder.

In this embodiment, load switching between the feeders is triggered based on the voltage and current information collected by the control module 200. The control mode provided in this embodiment of the present disclosure may also be described as follows: The energy consumption system works in the second working mode (in other words, the third feeder is powered by the first feeder and the second feeder). If the voltage and current information collected by the control module 200 indicates that the port of the second feeder is short-circuited, whether the first feeder can consume the load of the third feeder is detected. If the first feeder cannot consume the load of the third feeder, the fourth converter 14 is controlled to work in the rectification mode, and the first feeder and the fourth feeder supply power to the third feeder. If the first feeder can consume the load of the third feeder, the first feeder directly supplies power to the third feeder.

In this embodiment, if the second feeder is no longer short-circuited, the control module 200 may re-perform load switching between the feeders based on the real-time current and voltage information.

In this embodiment, if a fault detection result indicates that a port of a feeder is overloaded or short-circuited, based on the current working mode of the energy consumption system, a part of load of the overloaded or short-circuited feeder is transferred to another feeder to realize load balancing. In this embodiment of the present disclosure, any control mode can be switched autonomously based on actual voltage and current information.

Optionally, in a specific implementation of the energy consumption system provided in the present disclosure, that the control module 200 controls the working statuses of the first converter 11, the second converter 12, the third converter 13, and the fourth converter 14 based on the real-time current and voltage information may include:
when the energy consumption system currently works in a third working mode, if the real-time current and voltage information indicates that the four feeders cannot consume load of a random power generation device, controlling an energy storage device to work in a buck mode, and enabling the random power generation device to supply power to the first feeder, the second feeder, the third feeder, the fourth feeder, and the energy storage device.

The third working mode is as follows: The DC UPnP port is connected to the random power generation device and the energy storage device, the random power generation device is started, the energy storage device is cut off, the first converter 11, the second converter 12, the third converter 13, and the fourth converter 14 work in an inversion mode, and the random power generation device supplies power to the first feeder, the second feeder, the third feeder, and the fourth feeder.

In this embodiment, both the random power generation device and the energy storage device are external devices. The random power generation device may be a photovoltaic power generation device or a wind power generation device. Working modes of the energy storage device include the boost mode, the buck mode, and a cutoff mode. In the boost mode, the energy storage device provides electric energy for a DC-side bus of the energy consumption system. In the buck mode, the DC-side bus of the energy consumption system can charge the energy storage device and store electric energy. In the cutoff mode, the energy storage device is separated from the DC-side bus of the energy consumption system.

In this embodiment, load switching between the feeders is triggered based on the voltage and current information collected by the control module 200. The control mode provided in this embodiment of the present disclosure may also be described as follows: The energy consumption system works in the third working mode (in other words, the first feeder, the second feeder, the third feeder, and the fourth feeder are powered by the random power generation device). If the voltage and current information collected by the control module 200 indicates that the four feeders cannot consume the load of the random power generation device, the energy storage device can be controlled to work in the buck mode to charge the energy storage device.

In this embodiment, the third working mode increases aconsumption radius of random energy of the random power generation device, and improves a flexible transfer capability of the random energy.

In this embodiment, the control module 200 may alternatively control the working statuses of the first converter 11, the second converter 12, the third converter 13, and the fourth converter 14 based on the upper-layer scheduling information. For example, the current working mode of the energy consumption system is as follows: The DC UPnP port is connected to the random power generation device and the energy storage device, the first converter 11 and the third converter 13 work in the inversion mode, the second converter 12 and the fourth converter 14 are cut off, the energy storage device is cut off, the random power generation device is started, and the random power generation device supplies power to the first feeder and the third feeder. If the upper-layer scheduling information received by the control module 200 indicates to enable the random power generation device to supply power to the first feeder, the control module 200 can control the third converter 13 to cut off.

In this embodiment, the random load device may be a plug-in vehicle. The random energy (energy required by the random power generation device) is greatly affected by weather. In this embodiment, photovoltaic power generation and a plug-in vehicle are used as an example to describe a process of interconnection between the random power generation device, the random load device, and the energy consumption system. When the photovoltaic power generation device is used for power generation, a generated DC current is transmitted to the energy consumption system through the DC UPnP port, and converted into an AC current by various converters, so that the AC current is used by a load or used for grid connection. When a photovoltaic generating capacity is greater than power required by the load, excess power is consumed by the energy storage device. When a limited capacity of the energy storage device is about to run out, a background monitoring system can guide, based on real-time electricity tariff information sent by a business and distribution control system, a user of the plug-in vehicle to perform charging, to balance generated power and consumer's power while enjoying low electricity tariff. The background monitoring system may be a device sending the upper-layer scheduling information.

Optionally, in a specific implementation of the energy consumption system provided in the present disclosure, that the control module 200 controls the working statuses of the first converter 11, the second converter 12, the third converter 13, and the fourth converter 14 based on the real-time current and voltage information may include:
when the energyconsumption system currently works in a fourth working mode, if the real-time current and voltage information indicates that a port of the third feeder is short-circuited, controlling the third converter 13 to cut off, and detecting whether the first feeder can consume load of a random power generation device; and
if the firstfeeder cannot consume the load of the random power generation device, controlling an available converter in the fourth working mode to work in an inversion mode, and enabling the random power generation device to supply power to the first feeder and an available feeder in the fourth working mode; or if the first feeder can consume the load of the random power generation device, enabling the random power generation device to supply power to the first feeder. The available converter in the fourth working mode is the second converter 12 and/or the fourth converter 14, and the available feeder in the fourth working mode is the second feeder and/or the fourth feeder.

The fourthworking mode is as follows: The DC UPnP port is connected to the random power generation device, the random power generation device is started, the first converter 11 and the third converter 13 work in the inversion mode, the second converter 12 and the fourth converter 14 are cut off, and the random power generation device supplies power to the first feeder and the third feeder.

In this embodiment, load switching between the feeders is triggered based on the voltage and current information collected by the control module 200. The control mode provided in this embodiment of the present disclosure may also be described as follows: When the random power generation device supplies power to the first feeder and the third feeder, if the third feeder is short-circuited, whether the first feeder can consume the load of the random power generation device is detected. If the first feeder cannot consume the load of the random power generation device, the random power generation device supplies power to the first feeder and the available feeder (namely, the second feeder and/or the fourth feeder) in the fourth working mode. If the first feeder can consume the load of the random power generation device, the random power generation device directly supplies power to the first feeder.

Optionally, in a specific implementation of the energy consumption system provided in the present disclosure, that the control module 200 controls the working statuses of the first converter 11, the second converter 12, the third converter 13, and the fourth converter 14 based on the real-time current and voltage information may include:
when the energy consumption system currently works in a fifth working mode, if the real-time current and voltage information indicates that a supply current of a random power generation device is less than a second preset current and a port voltage of a random load device is less than a second preset voltage, controlling an energy storage device to work in a boost mode, and/or controlling an available converter in the fifth working mode to work in a rectification mode, and enabling the random power generation device, the energy storage device, and/or an available feeder in the fifth working mode to supply power to the random load device. The available converter in the fifth working mode is at least one of the first converter 11, the second converter 12, the third converter 13, and the fourth converter 14, and the available feeder in the fifth working mode is at least one of the first feeder, the second feeder, the third feeder, and the fourth feeder.

The fifth working mode is as follows: The DC UPnP port is connected to the random power generation device, the random load device, and the energy storage device, the random power generation device and the random load device are started, the energy storage device, the first converter 11, the second converter 12, the third converter 13, and the fourth converter 14 are cut off, and the random power generation device supplies power to the random load device.

In this embodiment, load switching between the feeders is triggered based on the voltage and current information collected by the control module 200. The control mode provided in this embodiment of the present disclosure may also be described as follows: When the energy consumption system currently works in the fifth working mode (in other words, the random load device is powered by the random power generation device), if the real-time current and voltage information indicates that a power supply capability of the random power generation device greatly decreases (if the random power generation device is a photovoltaic power generation device, the power supply capability of the random power generation device greatly decreases at night), and cannot satisfy an energy storage demand of the energy storage device, at least one available feeder in the fifth working mode can be selected to charge the energy storage device. A quantity of selected feeders may be properly set based on a demand of the energy storage device.

Optionally, in a specific implementation of the energy consumption system provided in the present disclosure, the control module 200 further controls the working statuses of the first converter 11, the second converter 12, the third converter 13, and the fourth converter 14 based on the upper-layer scheduling information to realize load switching between the feeders.

That the control module 200 controls the working statuses of the first converter 11, the second converter 12, the third converter 13, and the fourth converter 14 based on the upper-layer scheduling information may include:
when the energyconsumption system currently works in a sixth working mode, if the upper-layer scheduling information indicates to control the first converter 11 to cut off, controlling the first converter 11 to cut off, controlling the second converter 12 and/or the third converter 13 to work in a rectification mode, and enabling the second feeder and/or the third feeder to supply power to the fourth feeder.

The sixth working mode is as follows: The DC UPnP port is not connected to any external device, the first converter 11 works in the rectification mode, the fourth converter 14 works in an inversion mode, the second converter 12 and the third converter 13 are cut off, and the first feeder supplies power to the fourth feeder.

In this embodiment, load switching between the feeders is triggered based on the upper-layer scheduling information received by the control module 200. It can be learned from the foregoing description that, after adjusting a working mode of a converter based on the upper-layer scheduling information, the control module 200 can further perform, based on possible load imbalance after the adjustment, adjustment.

Optionally, in a specific implementation of the energy consumption system provided in the present disclosure, the control module 200 further controls the working statuses of the first converter 11, the second converter 12, the third converter 13, and the fourth converter 14 based on the upper-layer scheduling information to realize load switching between the feeders.

That the control module 200 controls the working statuses of the first converter 11, the second converter 12, the third converter 13, and the fourth converter 14 based on the upper-layer scheduling information may include:
when the energyconsumption system currently works in a seventh working mode, if the upper-layer scheduling information indicates to control a random power generation device to cut off, controlling the random power generation device to cut off, and detecting whether the first feeder and the third feeder can consume load of the second feeder and the fourth feeder; and
if the first feeder and the third feeder cannot consume the load of the second feeder and the fourth feeder, controlling an energy storage device to work in a boost mode, and enabling the second feeder and the fourth feeder to supply power to the first feeder, the third feeder, and the energy storage device; or if the first feeder and the third feeder can consume the load of the second feeder and the fourth feeder, enabling the second feeder and the fourth feeder to supply power to the first feeder and the third feeder.

The seventh working mode is as follows: The DC UPnP port is connected to the random power generation device and the energy storage device, the random power generation device is started, the energy storage device is cut off, the second converter 12 and the fourth converter 14 work in a rectification mode, the first converter 11 and the third converter 13 work in an inversion mode, and the random power generation device, the second feeder, and the fourth feeder supply power to the first feeder and the third feeder.

In this embodiment, load switching between the feeders is triggered based on the upper-layer scheduling information received by the control module 200. It can be learned from the foregoing description that, after adjusting a working mode of a converter based on the upper-layer scheduling information, the control module 200 can further perform, based on possible load imbalance after the adjustment, adjustment.

Optionally, in a specific implementation of the energy consumption system provided in the present disclosure, the input terminal of the communications unit is further configured to provide a port for receiving history reference information.

The operation unit generates, based on at least one of the real-time current and voltage information, the upper-layer scheduling information, and the history reference information, the driving signal of load switching. The history reference information includes a history factor of affecting user load and history load data.

In this embodiment, load switching between the feeders may also be triggered based on the history reference information in addition to the real-time current and voltage information and the upper-layer scheduling information. In other words, the control module 200 receives the history reference information, and controls the working statuses of the first converter 11, the second converter 12, the third converter 13, and the fourth converter 14 based on the history reference information to realize load switching between the feeders.

Optionally, in a specific implementation of the energy consumption system provided in the present disclosure, a method used by the operation unit to generate the driving signal of load switching is: receiving internal/external information (including but not limited to the real-time current and voltage information, the upper-layer scheduling information, and the history reference information), preprocessing data (including but not limited to removing an outlier, complementing missing data, and the like) in the internal/external information, performing multiscale decomposition on preprocessed internal/external information to obtain a plurality of reconstructed data sequences, performing load prediction based on the plurality of reconstructed data sequences, and generating, based on a load prediction result, the driving signal of load switching.

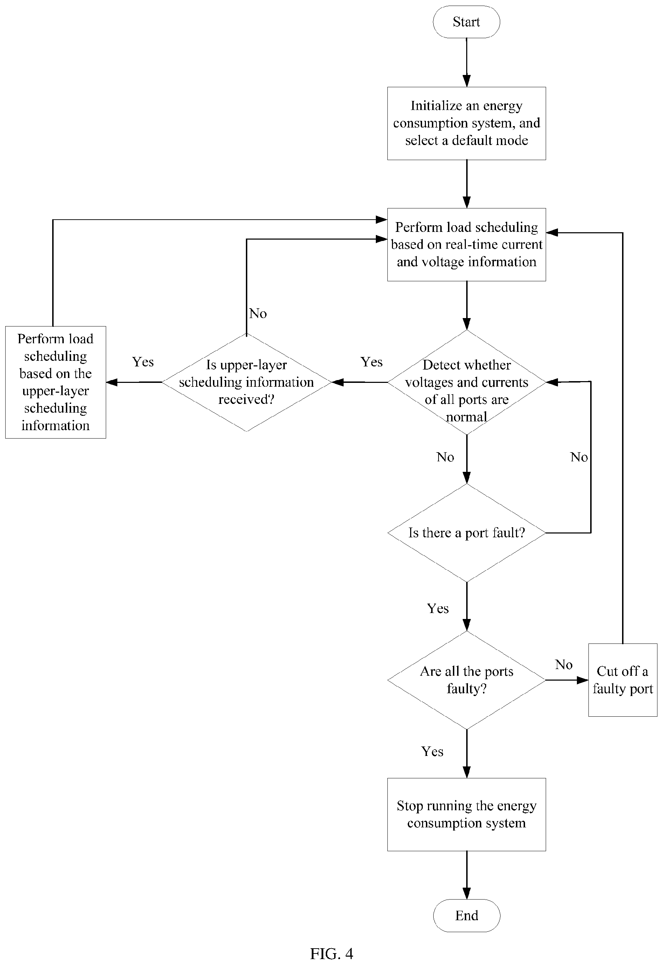

Optionally, in a specific implementation of the energy consumption system provided in the present disclosure, FIG. 4 is a control flowchart of the energy consumption system.

In this embodiment, a control process of the control module 200 in the energy consumption system may be as follows:
The energyconsumption system is initialized, and then a default mode is selected. The default mode may be preset as required. It includes but is not limited to the first working mode, the second working mode, the third working mode, and the like in the foregoing embodiment.

Load scheduling is performed based on real-time current and voltage information of various ports. The ports include but are not limited to a port connecting the energy consumption system to the first feeder, a port connecting the energy consumption system to the second feeder, a port connecting the energy consumption system to the third feeder, a port connecting the energy consumption system to the fourth feeder, and the first and second terminals of the first capacitor (namely, the DC UPnP port).

Whether real-time voltages and real-time currents of all the ports are normal is detected. If the real-time voltages and the real-time currents of all the ports are normal, whether the upper-layer scheduling information is received is detected. If the real-time voltages and the real-time currents of all the ports are abnormal, whether there is a port fault is detected.

If the upper-layer scheduling information is received, scheduling is performed based on the upper-layer scheduling information, and then load scheduling is performed based on the real-time current and voltage information. If the upper-layer scheduling information is not received, a working status in which load scheduling is performed based on the real-time current and voltage information is maintained.

If there is a port fault, whether all the ports are faulty is continuously detected. If all the ports are faulty, the energy consumption system is controlled to stop running. If not all the ports are faulty, a faulty port is controlled to cut off, and load scheduling is performed based on the real-time current and voltage information.

In this embodiment, FIG. 4 shows a control process of the control module 200 in the energy consumption system when the DC UPnP port is not connected to any external device. After the DC UPnP port is connected to an external device, a control process is similar to the control process shown in FIG. 4, and scheduling can be still performed according to the control process in FIG. 4. During load scheduling, the random power generation device may be regarded as a feeder that has only two working modes (the rectification mode and the cutoff mode), and the energy storage device may be directly regarded as a feeder. A principle is the same as that in FIG. 4, and details are not described herein again.

The above merely describes specific implementations of the present disclosure, but the protection scope of the present disclosure is not limited thereto. Any person skilled in the art can easily conceive equivalent modifications or replacements within the technical scope of the present disclosure, and these modifications or replacements shall fall within the protection scope of the present disclosure. Therefore, the protection scope of the present disclosure should be subject to the protection scope of the claims.

## Claims

1. An energy consumption system, comprising a control module and an energy consumption module, wherein
the energy consumption module is connected to feeders, and configured to perform load switching between the feeders according to a control instruction of the control module; and
the control module collects real-time current and voltage information of each port of the energy consumption module, and controls a working status of the energy consumption module based on the real-time current and voltage information to realize load switching between the feeders.

2. The energy consumption system according to claim 1, wherein the energy consumption module comprises a first converter, a second converter, a third converter, a fourth converter, a first capacitor, a second capacitor, a first filter, a second filter, a third filter, and a fourth filter;
an alternatecurrent (AC) terminal of the first converter is connected to a first feeder by the first filter, a first direct current (DC) terminal of the first converter is connected to a first terminal of the first capacitor and a second DC terminal of the fourth converter, and a second DC terminal of the first converter is connected to a second terminal of the first capacitor and a first DC terminal of the fourth converter;
an AC terminal of the second converter is connected to a second feeder by the second filter, a first DC terminal of the second converter is connected to a first terminal of the second capacitor and a second DC terminal of the third converter, and a second DC terminal of the second converter is connected to a second terminal of the second capacitor and a first DC terminal of the third converter;
an AC terminal of the third converter is connected to a third feeder by the third filter;
an AC terminal of the fourth converter is connected to a fourth feeder by the fourth filter;
the first terminal of the first capacitor is connected to the first terminal of the second capacitor, the second terminal of the first capacitor is connected to the second terminal of the second capacitor, and the first terminal and the second terminal of the first capacitor serve as DC plug and play (UPnP) ports; and
the control module collects real-time current and voltage information of the first feeder, the second feeder, the third feeder, the fourth feeder, and the two terminals of the first capacitor, and controls working statuses of the first converter, the second converter, the third converter, and the fourth converter based on the real-time current and voltage information to realize load switching between the feeders.

3. The energyconsumption system according to claim 2, wherein the control module comprises a detection unit, an operation unit, a drive unit, and a communications unit;
an input terminal of the detection unit is connected to the first feeder, the second feeder, the third feeder, the fourth feeder, the first terminal of the first capacitor, and the second terminal of the first capacitor, an output terminal of the detection unit is connected to an input terminal of the operation unit, an output terminal of the operation unit is connected to an input terminal of the drive unit, an output terminal of the drive unit is connected to the first converter, the second converter, the third converter, and the fourth converter, an input terminal of the communications unit serves as a port for receiving upper-layer scheduling information, and an output terminal of the communications unit is connected to the input terminal of the operation unit; and
the detection unit collects the real-time current and voltage information of the first feeder, the second feeder, the third feeder, the fourth feeder, and the two terminals of the first capacitor, and sends the real-time current and voltage information to the operation unit; the operation unit generates, based on the real-time current and voltage information or the upper-layer scheduling information, a driving signal of load switching, and sends the driving signal to the drive unit; and the drive unit adjusts the working statuses of the first converter, the second converter, the third converter, and the fourth converter based on the driving signal to realize load switching between the feeders.

4. The energyconsumption system according to claim 2, wherein that the control module controls the working statuses of the first converter, the second converter, the third converter, and the fourth converter based on the real-time current and voltage information comprises:
when the energyconsumption system currently works in a first working mode, if the real-time current and voltage information indicates that a port voltage of the third feeder is less than a first preset voltage and a supply current of the first feeder is greater than a first preset current, controlling an available converter in the first working mode to work in a rectification mode, and enabling the first feeder and an available feeder in the first working mode to supply power to the third feeder, wherein the available converter in the first working mode is the second converter and/or the fourth converter, and the available feeder in the first working mode is the second feeder and/or the fourth feeder; and
the first working mode is as follows: the DC UPnP port is not connected to any external device, the first converter works in the rectification mode, the third converter works in an inversion mode, the second converter and the fourth converter are cut off, and the first feeder supplies power to the third feeder.

5. The energyconsumption system according to claim 2, wherein that the control module controls the working statuses of the first converter, the second converter, the third converter, and the fourth converter based on the real-time current and voltage information comprises:
when theenergyconsumption system currently works in a second working mode, if the real-time current and voltage information indicates that a port of the second feeder is short-circuited, controlling the second converter to cut off, and detecting whether the first feeder can consume load of the third feeder; and
if the first feeder cannot consume the load of the third feeder, controlling the fourth converter to work in a rectification mode, and enabling the first feeder and the fourth feeder to supply power to the third feeder; or if the first feeder can consume the load of the third feeder, enabling the first feeder to supply power to the third feeder; wherein
the second working mode is as follows: the DC UPnP port is not connected to any external device, the first converter and the second converter work in the rectification mode, the third converter works in an inversion mode, the fourth converter is cut off, and the first feeder and the second feeder supply power to the third feeder.

6. The energyconsumption system according to claim 2, wherein that the control module controls the working statuses of the first converter, the second converter, the third converter, and the fourth converter based on the real-time current and voltage information comprises:
when the energy consumption system currently works in a third working mode, if the real-time current and voltage information indicates that the four feeders cannot consume load of a random power generation device, controlling an energy storage device to work in a buck mode, and enabling the random power generation device to supply power to the first feeder, the second feeder, the third feeder, the fourth feeder, and the energy storage device; wherein
the third working mode is as follows: the DC UPnP port is connected to the random power generation device and the energy storage device, the random power generation device is started, the energy storage device is cut off, the first converter, the second converter, the third converter, and the fourth converter work in an inversion mode, and the random power generation device supplies power to the first feeder, the second feeder, the third feeder, and the fourth feeder.

7. Theenergyconsumption system according to claim 2, wherein that the control module controls the working statuses of the first converter, the second converter, the third converter, and the fourth converter based on the real-time current and voltage information comprises:
when the energyconsumption system currently works in a fourth working mode, if the real-time current and voltage information indicates that a port of the third feeder is short-circuited, controlling the third converter to cut off, and detecting whether the first feeder can consume load of a random power generation device; and
if the first feeder cannot consume the load of the random power generation device, controlling an available converter in the fourth working mode to work in an inversion mode, and enabling the random power generation device to supply power to the first feeder and an available feeder in the fourth working mode; or if the first feeder can consume the load of the random power generation device, enabling the random power generation device to supply power to the first feeder; wherein the available converter in the fourth working mode is the second converter and/or the fourth converter, and the available feeder in the fourth working mode is the second feeder and/or the fourth feeder; and
the fourth working mode is as follows: the DC UPnP port is connected to the random power generation device, the random power generation device is started, the first converter and the third converter work in an inversion mode, the second converter and the fourth converter are cut off, and the random power generation device supplies power to the first feeder and the third feeder.

8. The energy consumption system according to claim 2, wherein that the control module controls the working statuses of the first converter, the second converter, the third converter, and the fourth converter based on the real-time current and voltage information comprises:
when the energyconsumption system currently works in a fifth working mode, if the real-time current and voltage information indicates that a supply current of a random power generation device is less than a second preset current and a port voltage of a random load device is less than a second preset voltage, controlling an energy storage device to work in a boost mode, and/or controlling an available converter in the fifth working mode to work in a rectification mode, and enabling the random power generation device, the energy storage device, and/or an available feeder in the fifth working mode to supply power to the random load device; wherein the available converter in the fifth working mode is at least one of the first converter, the second converter, the third converter, and the fourth converter, and the available feeder in the fifth working mode is at least one of the first feeder, the second feeder, the third feeder, and the fourth feeder; and
the fifth working mode is as follows: the DC UPnP port is connected to the random power generation device, the random load device, and the energy storage device, the random power generation device and the random load device are started, the energy storage device, the first converter, the second converter, the third converter, and the fourth converter are cut off, and the random power generation device supplies power to the random load device.

9. The energyconsumption system according to claim 3, wherein the control module further controls the working statuses of the first converter, the second converter, the third converter, and the fourth converter based on the upper-layer scheduling information to realize load switching between the feeders; and
that the control module controls the working statuses of the first converter, the second converter, the third converter, and the fourth converter based on the upper-layer scheduling information comprises:
when the energyconsumption system currently works in a sixth working mode, if the upper-layer scheduling information indicates to control the first converter to cut off, controlling the first converter to cut off, controlling the second converter and/or the third converter to work in a rectification mode, and enabling the second feeder and/or the third feeder to supply power to the fourth feeder; wherein
the sixth working mode is as follows: the DC UPnP port is not connected to any external device, the first converter works in the rectification mode, the fourth converter works in an inversion mode, the second converter and the third converter are cut off, and the first feeder supplies power to the fourth feeder.

10. The energyconsumption system according to claim 3, wherein the control module further controls the working statuses of the first converter, the second converter, the third converter, and the fourth converter based on the upper-layer scheduling information to realize load switching between the feeders; and
that the control module controls the working statuses of the first converter, the second converter, the third converter, and the fourth converter based on the upper-layer scheduling information comprises:
when the energyconsumption system currently works in a seventh working mode, if the upper-layer scheduling information indicates to control a random power generation device to cut off, controlling the random power generation device to cut off, and detecting whether the first feeder and the third feeder can consume load of the second feeder and the fourth feeder; and
if the first feeder and the third feeder cannot consume the load of the second feeder and the fourth feeder, controlling an energy storage device to work in a boost mode, and enabling the second feeder and the fourth feeder to supply power to the first feeder, the third feeder, and the energy storage device; or if the first feeder and the third feeder can consume the load of the second feeder and the fourth feeder, enabling the second feeder and the fourth feeder to supply power to the first feeder and the third feeder; wherein
the seventh working mode is as follows: the DC UPnP port is connected to the random power generation device and the energy storage device, the random power generation device is started, the energy storage device is cut off, the second converter and the fourth converter work in a rectification mode, the first converter and the third converter work in an inversion mode, and the random power generation device, the second feeder, and the fourth feeder supply power to the first feeder and the third feeder.

11. The energy consumption system according to claim 3, wherein the input terminal of the communications unit is further configured to provide a port for receiving history reference information; and
the operation unit generates, based on at least one of the real-time current and voltage information, the upper-layer scheduling information, and the history reference information, the driving signal of load switching, wherein the history reference information comprises a history factor of affecting user load and history load data.
